# EUROPÄISCHE PATENTSCHRIFT

(11) **EP 3 686 624 B1**
(45) Veröffentlichungstag und Bekanntmachung des Hinweises auf die Patenterteilung: **24.11.2021**
(21) Anmeldenummer: 20153453.4
(22) Anmeldetag: 23.01.2020
(51) Int. Cl.: G08G 1/16, G01S 17/04, G01S 7/48, G06K 9/00, G08G 1/14

(54) **VERFAHREN ZUR ÜBERWACHUNG EINES SCHUTZBEREICHS**
METHOD FOR MONITORING A PROTECTED AREA
PROCÉDÉ DE SURVEILLANCE D'UNE ZONE DE PROTECTION

(30) Priorität: 24.01.2019 DE 102019101737
(43) Veröffentlichungstag der Anmeldung: 29.07.2020
(73) Patentinhaber: SICK AG, 79183 Waldkirch (DE)
(72) Erfinder: Hansen, Christoph, 79183 Waldkirch (DE); Schubert, Lars, 79183 Waldkirch (DE)
(74) Vertreter: Manitz Finsterwald Patent- und Rechtsanwaltspartnerschaft mbB

(56) Entgegenhaltungen:
- DE-A1-102010 036 775
- DE-A1-102013 015 348
- US-A1- 2018 025 640
- US-A1- 2018 089 616
- HO GI JUNG ET AL: "Parking Slot Markings Recognition for Automatic Parking Assist System", 2006 IEEE INTELLIGENT VEHICLES SYMPOSIUM : MEGURO-KU, JAPAN, 13 - 15 JUNE 2006, IEEE, PISCATAWAY, NJ, USA, 13. Juni 2006 (2006-06-13), Seiten 106-113, XP010936998, ISBN: 978-4-901122-86-3
- JIN XU ET AL: "Vision-guided automatic parking for smart car", INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US, 3. Oktober 2000 (2000-10-03), Seiten 725-730, XP010529024, DOI: 10.1109/IVS.2000.898435 ISBN: 978-0-7803-6363-2
- WOLFGANG SCHULZ: "Passages", ALGORITHMISCHE AUSWERTUNG VON LIDAR-DISTANZDATEN: ANWENDUNG UND VERGLEICH VON ALGORITHMEN ZUR SICHERHEITSGERICHTETEN AUSWERTUNG VON 2D LASERSCANNER-ENTFERNUNGSDATEN, VDM VERLAG, DE, PAGE(S) 37 - 110 , 1. Januar 2005 (2005-01-01), XP009519461, ISBN: 978-3-639-06283-0 Gefunden im Internet: URL:http://babylon.internal.epo.org/projec ts/babylon/evl.nsf/0/BCD35A2E2F26B4AEC1258 53100246848/$FILE/Algorithmische%20Auswert ung%20von%20Lidar-Distanzdaten%20-%20Anwen dung%20un.pdf
- WITTMANN DAVID ET AL: "Improving lidar data evaluation for object detection and tracking using a priori knowledge and sensorfusion", 2014 11TH INTERNATIONAL CONFERENCE ON INFORMATICS IN CONTROL, AUTOMATION AND ROBOTICS (ICINCO), SCITEPRESS, Bd. 1, 1. September 2014 (2014-09-01), Seiten 794-801, XP032740360, DOI: 10.5220/0005117707940801 [gefunden am 2015-02-25]

## Beschreibung

Die vorliegende Erfindung betrifft ein Verfahren und ein Steuerungssystem zur Überwachung eines Schutzbereichs eines Fahrzeugs und ein Fahrzeug mit einem Steuerungssystem zur Überwachung eines Schutzbereichs des Fahrzeugs.

Verfahren und Steuerungssysteme zur Überwachung eines Schutzbereichs eines Fahrzeugs werden unter anderem eingesetzt, um automatisierte fahrerlose Transportfahrzeuge (FTF) abzusichern. Der Schutzbereich wird dabei von mindestens einem Umfeldsensor erfasst und ein Eindringen eines Objekts, beispielsweise einer Person, in den Schutzbereich wird von dem Umfeldsensor detektiert. Wird das Eindringen eines Objekts in den Schutzbereich festgestellt und der Schutzbereich dadurch verletzt, erfolgt ein Überführen des Fahrzeugs in einen sicheren Zustand, beispielsweise ein Not-Halt des Fahrzeugs. Als Umfeldsensoren werden insbesondere optische Systeme, beispielsweise Laserscanner, eingesetzt. Vorgaben zur Überwachung von Schutzbereichen, insbesondere von Fahrzeugen, sind in verschiedenen Sicherheitsnormen festgelegt.

Der Schutzbereich kann als ein Zwischenbereich zwischen dem Umfeldsensor und einer von dem Umfeldsensor beabstandeten Grenzkontur (z.B. einer Wand oder einer Palette) festgelegt sein und sich beispielsweise zwischen dem Umfeldsensor und der Grenzkontur erstrecken. Eine Überwachung des Schutzbereichs kann dann erfolgen, indem die Grenzkontur durch den Umfeldsensor abgetastet wird und eine Anordnung von bei der Abtastung bestimmten Tastpunkten in einem um die Grenzkontur herum angeordneten Toleranzband überprüft wird. Bei einer derartigen Konturüberwachung kann als Umfeldsensor insbesondere ein Abstandssensor eingesetzt werden.

Der Schutzbereich oder die Grenzkontur werden in der Regel vor dem Überwachen des Schutzbereichs normativ festgelegt. Es können auch vorab mehrere Schutzbereiche festgelegt und in dem Steuerungssystem hinterlegt werden, wobei sich die Schutzbereiche in Form, Ausrichtung oder Größe unterscheiden können. Zwischen den vordefinierten Schutzbereichen wird während des Betriebs des Fahrzeugs positions- und/oder zeitabhängig umgeschaltet. Wird der Schutzbereich durch eine von dem Umfeldsensor beabstandete Grenzkontur definiert, so können mehrere Grenzkonturen hinterlegt sein und es kann dynamisch, beispielsweise positionsabhängig, zwischen den hinterlegten Grenzkonturen gewechselt werden. Die Grenzkonturen werden üblicherweise vor Inbetriebnahme des Fahrzeugs erstellt und hinterlegt. Dies hat zur Folge, dass Veränderungen der Grenzkontur, die zur Laufzeit eines Steuerungssystems zur Überwachung des Schutzbereichs auftreten, zu einer unerwünschten Sicherheitsreaktion führen können.

Druckschrift US 2018 0 025 640 A1 beschreibt ein Verfahren zur virtuellen Erzeugung von Trainingsdaten, mit denen anschließend ein Algorithmus trainiert wird, der Parklücken in radarbasierten Umgebungsdaten eines Fahrzeugs erkennt. Druckschrift DE 10 2013 015 348 A1 beschreibt ein Verfahren zum automatisierten Anfahren eines nicht einsehbaren Parkplatzes.

Die Fachartikel Ho Gi Jung et al.: "Parking Slot Markings Recognition for Automatic Parking Assist System," 2006 IEEE Intelligent Vehicles Symposium, Meguroku, Japan, 2006, pp. 106-113, und Jin Xu et al.: "Vision-guided automatic parking for smart Car" Proceedings of the IEEE Intelligent Vehicles Symposium 2000 Dearborn, MI, USA, 2000, pp. 725-730, beschreiben Parkassistenzsysteme und darin verwendbare Verfahren zur Erkennung von Parkplatzmarkierungen in Kamerabildern.

Die Druckschrift US 2018 0 089 616 A1 beschreibt ein Verfahren zur Steuerung eines fahrerlosen Transportfahrzeugs, bei welchem das Fahrzeug zunächst an die bekannte ungefähre Position einer abgestellten Palette bewegt wird. Anschließend wird die genaue Position der Palette mittels Umfeldsensoren bestimmt und das Transportfahrzeug präzise derart relativ zu der Palette ausgerichtet, dass die Palette aufgenommen werden kann oder eine geladene Palette auf der vermessenen Palette abgestellt werden kann.

Die Abschlussarbeit Wolfgang Schulz: "Anwendung und Vergleich von Algorithmen zur sicherheitsgerichteten Auswertung von 2D Laserscanner-Entfernungsdaten", VDM Verlag, 2008, beschreibt Algorithmen zur Erkennung von Objekten in einem mittels eines Laserscanners abzusichernden Bereichs einer Tischkreissäge.

Der Fachartikel D. Wittmann et al.: "Improving lidar data evaluation for object detection and tracking using a priori knowledge and sensorfusion", 2014 11th International Conference on Informatics in Control, Automation and Robotics (ICINCO), Wien, 2014, pp. 794-801, beschreibt ein Verfahren, um Objekte in LIDAR-Daten, die unterschiedliche Verkehrssituationen darstellen, zu erkennen.

Die Druckschrift DE 10 2010 036775 A1 beschreibt ein Verfahren zur Absicherung einer Durchgangsöffnung eines Fördersystems.

Es ist Aufgabe der Erfindung ein Verfahren zur Überwachung eines Schutzbereichs, ein Steuerungssystem zur Überwachung eines Schutzbereichs und ein Fahrzeug mit einem derartigen Steuerungssystem anzugeben, die es ermöglichen, den Schutzbereich möglichst flexibel zu überwachen.

Diese Aufgabe wird jeweils durch ein Verfahren, ein Steuerungssystem und ein Fahrzeug gemäß den unabhängigen Ansprüchen gelöst. Weiterbildungen sind jeweils in den abhängigen Ansprüchen angegeben.

Ein Verfahren zur Überwachung eines Schutzbereichs eines Fahrzeugs, wobei der Schutzbereich zumindest bereichsweise durch eine Grenzkontur begrenzt wird, umfasst die Schritte gemäß Anspruch 1.

Indem die Referenzkontur, die bei der Überwachung des Schutzbereichs durch den Umfeldsensor herangezogen wird, erst dann eingelernt wird, wenn das Fahrzeug an der Grenzkontur positioniert wird, kann flexibel auf Veränderungen der Grenzkontur reagiert werden. Insbesondere kann die Grenzkontur während des Betriebs des Fahrzeugs dynamisch angepasst oder eingelernt werden. Es ist darüber hinaus auch möglich, einen Schutzbereich anhand einer vor Inbetriebnahme des Fahrzeugs unbekannten Grenzkontur festzulegen. Im Rahmen der Erfindung wurde also erkannt, dass ein durch eine Grenzkontur begrenzter Schutzbereich eines Fahrzeugs besonders flexibel überwacht werden kann, wenn die Referenzkontur erst während des Betriebs vor Ort und insbesondere unmittelbar vor dem Überwachen des Schutzbereichs eingelernt wird.

Die Grenzkontur kann durch eine von dem Umfeldsensor beabstandet angeordnete Wand oder Fläche vorgegeben werden. Die Grenzkontur kann insbesondere durch eine Außenkontur einer durch das Fahrzeug aufzunehmenden Ladung oder eines sonstigen, im Umfeld des Fahrzeugs positionierten, Umgebungsobjekts vorgegeben werden.

Der Schutzbereich kann durch einen Zwischenbereich gegeben sein, der sich zwischen dem Umfeldsensor und einer von dem Umfeldsensor beabstandet angeordneten Grenzkontur befindet oder erstreckt. Eine Überwachung des Schutzbereichs erfolgt erfindungsgemäß, indem die Grenzkontur durch den Umfeldsensor abgetastet wird und die dabei gewonnenen Messwerte mit durch die Referenzkontur vorgegebenen Referenzmesswerten verglichen werden. Die Messwerte umfassen bei der Abtastung bestimmte Tastpunkte.

Der Schutzbereich kann dadurch überwacht werden, dass eine Anordnung der durch die Messwerte repräsentierten Tastpunkte in einem um die Referenzkontur herum angeordneten Toleranzband überprüft wird. Bei einer derartigen Konturüberwachung kann als Umfeldsensor insbesondere ein Abstandssensor eingesetzt werden und die Messwerte können Abstandswerte zu in Richtung der Grenzkontur erfassten Objekten repräsentieren. Das Toleranzband beschreibt in diesem Fall eine noch zulässige Variation der Abstandswerte im Umfeld der Referenzkonturen. Ein zwischen der Grenzkontur und dem Umfeldsensor angeordnetes Objekt führt bei dem Überwachen des Schutzbereichs dazu, dass die durch die Messwerte repräsentierten Tastpunkte außerhalb des Toleranzbands angeordnet sind. Daraus kann auf eine Verletzung des Schutzbereichs geschlossen und eine Sicherheitsreaktion ausgelöst werden.

Das Fahrzeug kann während des Einlernens der Referenzkontur beispielsweise derart an dem Einlernbereich positioniert werden, dass das Fahrzeug in einem vorgegebenen Sicherheitsabstand zu der Grenzkontur positioniert wird. Insbesondere kann der Einlernbereich einen die Grenzkontur bis zu dem Sicherheitsabstand umgebenden Bereich umfassen oder durch einen derartigen Bereich gebildet werden. Das Fahrzeug kann insbesondere auf einer der Grenzkontur gegenüberliegenden Seite des Einlernbereichs positioniert werden. Der vorgegebene Sicherheitsabstand kann beispielsweise derart vorgegeben sein, dass eine Gefährdung eines zwischen dem Fahrzeug und der Grenzkontur angeordneten Objekts, insbesondere einer zwischen dem Fahrzeug und der Grenzkontur angeordneten Person, während des Einlernens ausgeschlossen ist. Das Fahrzeug kann insbesondere in einer Einlernposition von der Grenzkontur beabstandet positioniert werden. Das Positionieren des Fahrzeugs an dem Einlernbereich erfolgt insbesondere vor dem Einlernen der Referenzkontur. Während des Einlernens der Referenzkontur kann das Fahrzeug derart an dem Einlernbereich positioniert sein, dass der vorgegebene Sicherheitsabstand nicht unterschritten wird.

Das Positionieren des Fahrzeugs an dem Einlernbereich und das Einlernen der Referenzkontur können insbesondere zur Laufzeit eines das Fahrzeug im Normalbetrieb steuernden Steuerprogramms erfolgen. Das Steuerprogramm kann beispielsweise auf einem das Fahrzeug steuernden Steuerungssystem hinterlegt und während der Laufzeit von dem Steuerungssystem ausgeführt werden. Während der Laufzeit des Steuerprogramms kann beispielsweise ein Positionierbefehl an das Steuerungssystem übermittelt werden, aufgrund dessen das Positionieren des Fahrzeugs an dem Einlernbereich ausgeführt wird. Bei dem Positionierbefehl kann es sich beispielsweise um einen Fahrbefehl mit Koordinaten einer an dem Einlernbereich angeordneten Position oder Lage des Fahrzeugs, insbesondere mit Koordinaten der Einlernposition bzw. einer Einlernlage, handeln. Dabei beschreibt die Lage bzw. die Einlernlage des Fahrzeugs sowohl die Position des Fahrzeugs im Raum, als auch dessen Ausrichtung. Die Lage kann auch als Pose des Fahrzeugs bezeichnet werden. Dem Steuerungssystem kann alternativ oder zusätzlich auch der Einlernbereich und/oder der Sicherheitsabstand vorgegeben werden.

Das Fahrzeug kann insbesondere als Fahrerloses Transportfahrzeug (FTF) ausgebildet sein. Das Fahrzeug kann neben dem Umfeldsensor auch weitere Umfeldsensoren umfassen, welche zur Überwachung des Schutzbereichs herangezogen werden. Insbesondere kann die Grenzkontur bei dem Einlernen der Referenzkontur mit mehreren Umfeldsensoren vermessen werden und der Schutzbereich kann basierend auf Messwerten der mehreren Umfeldsensoren überwacht werden.

Der Umfeldsensor kann als Distanzsensor, insbesondere als optischer Distanzsensor, ausgebildet sein und die Messwerte können Abstandswerte zu vor dem Umfeldsensor platzierten Objekten repräsentieren. Der Distanzsensor kann die Abstandswerte mittels einer Lichtlaufzeitmessung bestimmen. Der Distanzsensor kann insbesondere als Laserscanner ausgebildet sein. Der Umfeldsensor kann den Überwachungsbereich abtasten, etwa in einer zweidimensionalen Schutzebene. Der Umfeldsensor kann den Überwachungsbereich auch in einem dreidimensionalen Schutzvolumen abtasten.

Bei einer Weiterbildung des Verfahrens umfasst das Einlernen die folgenden Schritte:
- Erfassen von Umfeldsensordaten mittels des Umfeldsensors aus dem Einlernbereich,
- Ableiten einer Messkontur aus den Umfeldsensordaten,
- Überprüfen einer Konsistenz der Messkontur,
- Hinterlegen der Messkontur als die Referenzkontur zum Überwachen des Schutzbereichs, falls die Messkontur konsistent ist.

Indem die aus den Umfeldsensordaten abgeleitete Messkontur vor dem Hinterlegen als Referenzkontur auf Konsistenz geprüft wird, kann sichergestellt werden, dass lediglich eine korrekt erfasste und die Grenzkontur korrekt repräsentierende Messkontur als Referenzkontur hinterlegt wird.

Während des Erfassens der Umfeldsensordaten wird der an dem Fahrzeug angeordnete Umfeldsensor derart ausgerichtet, dass der Einlernbereich, insbesondere die Grenzkontur, zumindest teilweise in einem Erfassungsbereich des Umfeldsensors angeordnet ist. Die Umfeldsensordaten repräsentieren Einlernmesswerte auf in dem Einlernbereich angeordnete Objekte, insbesondere Einlernmesswerte auf die in dem Einlernbereich angeordnete Grenzkontur. Zusammen mit den Einlernmesswerten können Positionsmesswerte erfasst werden, welche die Lage des Fahrzeugs, insbesondere die Position des Fahrzeugs, während des Erfassens der Einlernmesswerte repräsentieren. Die Positionsmesswerte können die Lage des Fahrzeugs in einem globalen Koordinatensystem eines durch das Fahrzeug befahrenen Arbeitsbereichs repräsentieren.

Nach dem Erfassen der Umfeldsensordaten und gegebenenfalls der Positionsmesswerte kann die Messkontur mittels eines Scan-Matching Verfahrens abgeleitet werden. Bei dem Scan-Matching Verfahren werden die durch die Umfeldsensordaten repräsentierten und von dem Umfeldsensor erfassten Strukturen bestmöglich übereinandergelegt, beispielsweise unter Berücksichtigung von aus den Positionsmesswerten ermittelten Absolutpositionen. Die Strukturen können beispielsweise derart übereinandergelegt werden, dass Abweichungen zwischen überlappenden Abschnitten der Strukturen minimiert werden.

Die Messkontur ist insbesondere dann konsistent, wenn die übereinandergelegten Strukturen übereinstimmen oder nur geringe Abweichungen voneinander aufweisen. Die Messkontur kann beispielsweise dann konsistent sein, wenn die Abweichungen zwischen den Strukturen bzw. zwischen überlappenden Abschnitten der Strukturen kleiner als ein vorgegebener Grenzwert sind.

Bei dem Verfahren umfasst das Überwachen die folgenden Schritte:
- Einlesen der durch den Umfeldsensor erfassten Messwerte und
- Vergleichen der Messwerte mit der hinterlegten Referenzkontur.

Bei einer Weiterbildung des Verfahrens umfasst das Überwachen die folgenden Schritte:
- Ausrichten des Umfeldsensors auf die Grenzkontur,
- Einlesen der durch den Umfeldsensor erfassten Messwerte und
- Vergleichen der Messwerte mit der hinterlegten Referenzkontur.

Dadurch können die Bewegungen eines den Umfeldsensor umfassenden Fahrzeugs besonders einfach gegen die Grenzkontur abgesichert werden. Das Vergleichen der Messwerte mit der hinterlegten Referenzkontur kann beispielsweise erfolgen, indem die Anordnung der durch die Messwerte repräsentierten Tastpunkte in dem die Referenzkontur umgebenden Toleranzband überprüft und eine Anordnung einzelner oder mehrere Tastpunkte außerhalb des Toleranzbands festgestellt wird. Die Messwerte und die Referenzkontur, sowie dass die Referenzkontur umgebende Toleranzband, können bei dem Vergleichen der Messwerte mit der hinterlegten Referenzkontur jeweils in einer Darstellung in globalen Koordinaten des Arbeitsbereichs des Fahrzeugs verarbeitet werden. Außerdem können die Referenzkontur und/oder das Toleranzband in globalen Koordinaten des Arbeitsbereichs hinterlegt sein.

Bei dem Verfahren wird das Fahrzeug in einen sicheren Zustand versetzt, wenn die Messwerte außerhalb eines um die Referenzkontur angeordneten Toleranzbandes liegen.

Eine Weiterbildung des Verfahrens umfasst ein Ausführen einer den Schutzbereich gefährdenden Bewegung des Fahrzeugs. Das Überwachen des Schutzbereichs erfolgt während des Ausführens der Bewegung und das Ausführen der Bewegung wird gestoppt, wenn die Messwerte von der Referenzkontur abweichen. Das Einlernen der Referenzkontur kann insbesondere erfolgen und vorzugsweise abgeschlossen sein, ehe mit dem Ausführen der den Schutzbereich gefährdenden Bewegung des Fahrzeugs begonnen wird. Indem die den Schutzbereich zumindest teilweise begrenzende Referenzkontur vor Ort und vor Ausführen der Bewegung eingelernt wird, kann die Bewegung des Fahrzeugs besonders flexibel abgesichert werden.

Eine Bewegung des Fahrzeugs gefährdet den Schutzbereich dann, wenn sie eine Gefahr für in dem Schutzbereich befindliche Objekte oder Personen darstellt. Die den Schutzbereich gefährdende Bewegung des Fahrzeugs kann eine Bewegung des gesamten Fahrzeugs sein. Beispielsweise kann die den Schutzbereich gefährdende Bewegung eine Bewegung des Fahrzeugs in Richtung der Grenzkontur sein, durch welche der Zwischenbereich zwischen dem Fahrzeug und der Grenzkontur verkleinert wird. Die den Schutzbereich gefährdende Bewegung kann auch eine Bewegung eines Fahrzeugteils des Fahrzeugs umfassen. Der Fahrzeugteil kann beispielsweise eine Lastaufnahmeeinrichtung des Fahrzeugs, etwa eine Palettengabel, sein. Die den Schutzbereich gefährdende Bewegung des Fahrzeugs kann insbesondere ein Aufnehmen der Ladung durch das Fahrzeug umfassen. Das Stoppen des Ausführens der Bewegung stellt eine Sicherheitsreaktion dar. Eine Weiterbildung des Verfahrens umfasst nach dem Positionieren des Fahrzeugs an dem Einlernbereich ein Halten des Fahrzeugs in einem sicheren Zustand und das Einlernen der Referenzkontur erfolgt, während sich das Fahrzeug in dem sicheren Zustand befindet. Dadurch kann sichergestellt werden, dass eine Gefährdung von in dem Schutzbereich des Fahrzeugs angeordneten Objekten während des Einlernens der Referenzkontur ausgeschlossen ist.

Das Fahrzeug kann in dem sicheren Zustand gehalten werden, indem eine Bewegung des Fahrzeugs eingeschränkt wird, beispielsweise vollständig unterbunden oder nur mit einem sicher überwachten Bewegungsmuster zugelassen wird. Das sicher überwachte Bewegungsmuster kann beispielsweise eine sicher reduzierte Geschwindigkeit, Beschleunigung oder Ähnliches umfassen. Das sicher überwachte Bewegungsmuster kann auch eine Beschränkung der Bewegung auf sichere Positionen umfassen, beispielsweise eine Beschränkung der Bewegung derart, dass das Fahrzeug den Sicherheitsabstand zu der Grenzkontur sicher einhält.

Bei einer Weiterbildung des Verfahrens wird die Grenzkontur durch ein in einem Arbeitsbereich des Fahrzeugs variabel positionierbares Umgebungsobjekt vorgegeben. Das Umgebungsobjekt kann ein in dem Arbeitsbereich abgestelltes Objekt, beispielsweise Lagergut oder ein weiteres Fahrzeug, sein. Die Grenzkontur kann durch einen Abschnitt einer Außenkontur des Umgebungsobjekts vorgegeben werden. Der Abschnitt kann beispielsweise in einem Schnittbereich, insbesondere in einer Schnittebene, des Umgebungsobjekts mit dem Erfassungsbereich des Umfeldsensors angeordnet sein. Der Abschnitt kann auch die komplette Außenkontur des Umgebungsobjekts umfassen.

Indem der Schutzbereich durch eine durch das Umgebungsobjekt definierte Grenzkontur begrenzt wird, kann ein zwischen dem Umgebungsobjekt und dem Fahrzeug angeordneter Zwischenraum als Schutzbereich überwacht werden und das Fahrzeug kann sich dem Umgebungsobjekt sicher annähern.

Bei alternativen Weiterbildungen kann die Grenzkontur auch durch eine den Arbeitsbereich des Fahrzeugs statisch begrenzende Struktur, beispielsweise eine Wand oder Ähnliches, vorgegeben werden.

Bei einer Weiterbildung des Verfahrens wird das Umgebungsobjekt durch eine von dem Fahrzeug aufzunehmende Ladung gebildet. Indem die Referenzkontur durch Vermessung der das Umgebungsobjekt bildenden Ladung eingelernt wird, kann ein flexibel an die Ladung angepasster Schutzbereich definiert werden. Insbesondere bei einer durch das Fahrzeug aufzunehmende Ladung können die Außenkonturen des Umgebungsobjekts oftmals im Vorhinein nur schlecht definiert werden, beispielsweise wenn es sich bei der Ladung um auf Trägern, etwa Paletten, angeordnetes Stückgut handelt.

Bei einer Weiterbildung des Verfahrens wird eine Mehrzahl von Umfeldsensordatensätzen mit Umfeldsensordaten erfasst und das Ableiten der Messkontur umfasst ein Erstellen von Teilkonturen aus den einzelnen Umfeldsensordatensätzen, sowie ein räumliches Überlagern der Teilkonturen. Indem die Messkontur aus einer Überlagerung mehrerer Teilkonturen abgeleitet wird, kann die Messkontur besonders zuverlässig und flexibel abgeleitet werden.

Die Grenzkontur kann sich während des Einlernens der Referenzkontur auch relativ zu dem Umfeldsensor bewegen, beispielsweise aufgrund einer Bewegung der Grenzkontur selbst oder aufgrund einer Bewegung des Umfeldsensors, so dass diese Bewegung durch das Überlagern der Teilkonturen erkannt und bei dem Ableiten der Messkontur berücksichtigt werden kann. Die einzelnen Umfeldsensordatensätze können jeweils Umfeldsensordaten umfassen, die erfasst werden, während sich die Grenzkontur und der Umfeldsensor in einer konstanten relativen Lage zueinander befinden.

Die Grenzkontur kann auch derart ausgebildet sein, dass sie nicht mittels eines in einer einzelnen Vermessung der Grenzkontur ermittelten Umfeldsensordatensatzes erfasst werden kann. Dies kann beispielsweise dann der Fall sein, wenn die Grenzkontur größer ist als ein Erfassungsbereich des Umfeldsensors und/oder wenn die Grenzkontur Strukturen aufweist, beispielsweise Hinterschneidungen, welche der Umfeldsensor nicht vollständig aus einer einzelnen relativen Lage heraus erfassen kann.

Bei einer Weiterbildung des Verfahrens werden bei dem Überprüfen der Konsistenz der Messkontur alle Teilkonturen ausgehend von einer Startkontur nacheinander mit der Startkontur verglichen.

Die Startkontur wird durch eine der Teilkonturen gebildet, beispielsweise durch eine zufällig ausgewählte Teilkontur oder durch eine Teilkontur, die aus dem ersten bei dem Vermessen der Grenzkontur erfassten Umfeldsensordatensatz erstellt wurde. Die Teilkonturen können dadurch mit der Startkontur verglichen werden, dass jeweils eine Abweichung zwischen den Teilkonturen und der Startkontur ermittelt wird. Die Abweichung kann beispielsweise eine mittlere Abweichung, beispielsweise eine als quadratisches Mittel ermittelte Abweichung sein. Bei dem Vergleichen der Teilkonturen mit der Startkontur kann für jede der einzelnen Teilkonturen jeweils ein derartiger Abweichungswert ermittelt werden.

Bei einer Weiterbildung des Verfahrens wird als die Startkontur eine vordefinierte und hinterlegte Referenzteilkontur verwendet. Dadurch kann die Konsistenz der Messkontur auf einfache und schnelle Weise überprüft werden. Die Referenzteilkontur kann insbesondere als eine exakte Teilkontur, beispielsweise als eine frei von Messfehlern oder Rauschbeiträgen definierte Teilkontur, hinterlegt sein.

Bei einer Weiterbildung des Verfahrens umfasst das Überprüfen der Konsistenz der Messkontur ein Berechnen eines Gütewerts für die Überlagerung der Teilkonturen und ein Vergleichen des Gütewerts mit einem vorgegebenen Schwellenwert. Die Messkontur ist konsistent, wenn der Gütewert den vorgegebenen Schwellenwert unterschreitet. Der Gütewert kann aus einem der Abweichungswerte abgeleitet sein, die bei dem Vergleichen der Teilkonturen mit der Startkontur ermittelt werden. Der Gütewert kann insbesondere aus allen Abweichungswerten abgeleitet sein, beispielsweise als ein Mittelwert der Abweichungswerte, etwa als ein quadratisches Mittel oder als ein Median der Abweichungswerte.

Der Gütewert kann auch Abweichungswerte umfassen, die bei einem Vergleich zweier oder mehrerer von der Startkontur verschiedener Teilkonturen ermittelt werden. Beispielsweise kann eine Mehrzahl von Abweichungswerten jeweils paarweise für jedes Paar von Teilkonturen, insbesondere paarweise für jedes Paar von miteinander überlappend angeordneten Teilkonturen, ermittelt werden. Um die Konsistenz der Referenzkontur zu überprüfen, können die einzelnen Abweichungswerte der Paare von Teilkonturen mit jeweils einem Schwellenwert verglichen werden. Es kann aber auch ein mittlerer Abweichungswert als ein Mittelwert der Abweichungswerte der einzelnen Paare von Teilkonturen gebildet und mit dem Schwellenwert verglichen werden. Die Konsistenz kann festgestellt werden, wenn jeder der Abweichungswerte bzw. der mittlerer Abweichungswert den Schwellenwert unterschreitet.

Bei einer Weiterbildung des Verfahrens wird das Fahrzeug während des Vermessens der Grenzkontur in unterschiedlichen räumlichen Lagen angeordnet. Dadurch kann die Grenzkontur besonders genau vermessen werden. Insbesondere kann das Fahrzeug während des Erfassens der Umfeldsensordaten der einzelnen Umfeldsensordatensätze in unterschiedlichen räumlichen Lagen angeordnet werden.

Bei einer Weiterbildung des Verfahrens umfasst das Verfahren ein Erfassen von die unterschiedlichen räumlichen Lagen repräsentierenden Lagedaten und die Lagedaten werden bei dem Überprüfen der Konsistenz der Messkontur berücksichtigt. Dadurch kann die Konsistenz der Messkontur besonders sicher und genau überprüft werden.

Die Lagedaten können insbesondere gemessene Lagen des Fahrzeugs repräsentieren. Die Lagedaten können jeweils den einzelnen bei konstanter relativer Lage zwischen dem Umfeldsensor und der Grenzkontur ermittelten Umfeldsensordatensätzen zugeordnet sein. Die Lagedaten können mittels eines an dem Fahrzeug angeordneten Positionssensors erfasst werden. Der Positionssensor kann ein absoluter Positionssensor zur Erfassung der Lage des Fahrzeugs in einem globalen Koordinatensystem des Arbeitsbereichs des Fahrzeugs oder aber ein relativer Positionssensor zur Erfassung einer relativen Lageänderung bei Bewegung des Fahrzeugs, beispielsweise als ein Odometer, ausgebildet sein.

Die Lagedaten können dadurch bei dem Überprüfen der Konsistenz der Messkontur berücksichtigt werden, dass aus der Messkontur auf die unterschiedlichen räumlichen Lagen, in denen das Fahrzeug während der Vermessung der Grenzkontur, insbesondere bei der Erfassung der einzelnen Umfeldsensordatensätze, angeordnet wird, geschlossen wird und eine Übereinstimmung mit den durch die Lagedaten repräsentierten räumlichen Lagen überprüft wird.

Bei einer Weiterbildung des Verfahrens umfasst das Berücksichtigen der Lagedaten bei dem Überprüfen der Konsistenz der Messkontur ein Ableiten von aus der Vermessung der Grenzkontur abgeleiteten Lagen des Fahrzeugs und ein Vergleichen der abgeleiteten Lagen des Fahrzeugs mit durch die Lagedaten repräsentierten gemessenen Lagen des Fahrzeugs. Die abgeleiteten Lagen können insbesondere aus den bei der Vermessung der Grenzkontur gewonnenen Umfeldsensordaten abgeleitet werden. Beispielsweise kann jeweils eine abgeleitete Lage für jeden der einzelnen Umfeldsensordatensätze ermittelt werden. Die abgeleiteten Lagen können auch jeweils nur als Lageänderungen, die das Fahrzeug zwischen dem Erfassen der einzelnen Umfeldsensordatensätze ausführt, abgeleitet und mit aus den Lagedaten abgeleiteten Lageänderungen verglichen werden. Dies kann insbesondere dann erfolgen, wenn die Lagedaten jeweils nur als relative Lagedaten erfasst werden, beispielsweise mittels eines relativen Positionssensors.

Zusammengefasst kann das Einlernen der Referenzkontur ein Positionieren des Fahrzeugs in einer ersten Lage und ein Positionieren des Fahrzeugs in einer zweiten Lage umfassen. Weiter kann das Einlernen der Referenzkontur ein Einlesen von ersten Umfeldsensordaten und ersten Lagedaten in der ersten Lage und ein Einlesen von zweiten Umfeldsensordaten und zweiten Lagedaten in der zweiten Lage umfassen. Das Einlernen kann außerdem ein Ableiten einer ersten Teilkontur aus den ersten Umfeldsensordaten und ein Ableiten einer zweiten Teilkontur aus den zweiten Umfeldsensordaten, sowie ein räumliches Überlagern der ersten Teilkontur und der zweiten Teilkontur umfassen.

Anschließend kann das Einlernen der Referenzkontur ein Ermitteln eines ersten Abweichungswerts zwischen der ersten Teilkontur und der Startkontur, sowie ein Ermitteln eines zweiten Abweichungswerts zwischen der zweiten Teilkontur und der Startkontur umfassen. Alternativ oder zusätzlich kann das Einlernen der Referenzkontur auch ein Ermitteln eines Abweichungswerts zwischen der ersten Teilkontur und der zweiten Teilkontur aus der Überlagerung aus der ersten Teilkontur und der zweiten Teilkontur umfassen. Weiter kann das Einlernen der Referenzkontur ein Bestimmen des Gütewerts aus dem ersten Abweichungswert und dem zweiten Abweichungswert, beispielsweise durch Mittelwertbildung zur Mittelung des ersten und zweiten Abstandswerts, und ein Vergleichen des Gütewerts mit einem vorgegebenen Schwellenwert umfassen.

Zusätzlich oder alternativ zu dem Bestimmen des Gütewerts kann das Einlernen der Referenzkontur auch ein Ermitteln einer ersten ermittelten Lage und ein Ermitteln einer zweiten ermittelten Lage aus der Überlagerung der ersten und der zweiten Teilkontur umfassen, wobei die erste ermittelte Lage eine Lage des Fahrzeugs während des Einlesens der ersten Umfeldsensordaten und die zweite ermittelte Lage eine Lage des Fahrzeugs während des Einlesens der zweiten Umfeldsensordaten repräsentiert. Das Einlernen der Referenzkontur kann dann einen ersten Lagevergleich der ersten ermittelten Lage mit einer aus den ersten Lagedaten ermittelten ersten gemessenen Lage des Fahrzeugs und einen zweiten Lagevergleich der zweiten ermittelten Lage mit einer aus den zweiten Lagedaten ermittelten zweiten gemessenen Lage des Fahrzeugs umfassen. Die Messkontur wird als Referenzkontur hinterlegt, wenn eine Abweichung zwischen der ersten ermittelten Lage und der ersten gemessenen Lage, sowie einer Abweichung zwischen der zweiten ermittelten Lage und der zweiten gemessenen Lage jeweils kleiner als ein vorgegebener Grenzwert.

Der erste und der zweite Lagevergleich können auch dadurch erfolgen, dass eine ermittelte Lageänderung, die das Fahrzeug zwischen der ersten und zweiten ermittelten Lage ausführt, und eine gemessene Lageänderung, die das Fahrzeug zwischen der ersten und zweiten gemessenen Lage ausführt, abgeleitet wird und ein Lageänderungsvergleich zur Ermittlung einer Abweichung zwischen der ermittelten Lageänderung und der gemessenen Lageänderung ausgeführt wird. Die Messkontur wird als Referenzkontur hinterlegt, wenn eine Abweichung zwischen der ermittelten Lageänderung und der gemessenen Lageänderung einen vorgegebenen Grenzwert unterschreitet.

Bei einer Weiterbildung des Verfahrens umfasst das Einlernen der Messkontur ein Erkennen eines in dem Einlernbereich angeordneten Störobjekts. Das Störobjekt kann insbesondere zwischen dem Umfeldsensor und der Grenzkontur angeordnet sein. Bei dem Störobjekt kann es sich beispielsweise um ein sich durch den Einlernbereich bewegendes Störobjekt handeln. Bei dem Störobjekt kann es sich insbesondere um eine sich in dem Einlernbereich aufhaltende oder um eine den Einlernbereich durchquerende Person handeln. Das Störobjekt kann durch einen Vergleich der bei der Vermessung der Grenzkontur erfassten Umfeldsensordaten mit hinterlegten Störobjektdaten erkannt werden.

Bei einer Weiterbildung des Verfahrens wird das Störobjekt auf Grundlage seiner Form, seiner Bewegung und/oder seiner Reflexionseigenschaften erkannt. Insbesondere können die hinterlegten Störobjektdaten Informationen zu der Form, der Bewegung und/oder den Reflexionseigenschaften des Störobjekts umfassen. Die Form des Störobjekts kann durch eine charakteristische Kontur des Störobjekts vorgegeben sein, bei einer Person beispielsweise durch eine charakteristische Kontur der Beine der Person (zwei etwa zylinderförmige Objekte nebeneinander). Die Bewegung des Störobjekts kann durch ein charakteristisches Bewegungsmuster des Störobjekts vorgegeben sein, bei einer Person beispielsweise durch eine Pendelbewegung der Beine der Person.

Bei einer Weiterbildung des Verfahrens wird die eingelernte Referenzkontur ohne das Störobjekt erstellt. Dadurch kann die Referenzkontur auch dann eingelernt werden, wenn während des Einlernens zeitweise oder dauerhaft das Störobjekt innerhalb des Einlernbereichs angeordnet ist. Die Referenzkontur kann insbesondere dadurch ohne das Störobjekt erstellt werden, dass die Grenzkontur aus unterschiedlichen Positionen oder zu unterschiedlichen Zeiten derart vermessen wird, dass auch Abschnitte der Grenzkontur erfasst werden, die in einer oder in mehreren Positionen bzw. zu einer oder mehreren Zeiten durch das Störobjekt verdeckt werden.

Bei einer Weiterbildung des Verfahrens ist der Umfeldsensor als ein Abstandssensor, vorzugsweise als ein optischer Abstandssensor, ausgebildet. Die Messwerte und/oder die Umfeldsensordaten können dann insbesondere durch den Umfeldsensor gemessene Abstandswerte umfassen.

Bei einer Weiterbildung des Verfahrens sind in der Referenzkontur bei der Vermessung der Grenzkontur gewonnene Remissionswerte hinterlegt und die Messwerte umfassen in dem Schutzbereich erfasste Remissionsmesswerte, welche bei dem Überwachen des Schutzbereichs mit den Remissionswerten der Referenzkontur verglichen werden. Dadurch kann die Referenzkontur besonders zuverlässig überwacht werden.

Es wird außerdem ein Steuerungssystem zur Überwachung eines Schutzbereichs eines Fahrzeugs mit einem an dem Fahrzeug anordenbaren Umfeldsensor und mit einer Steuereinrichtung angegeben, wobei der Schutzbereich zumindest bereichsweise durch eine Grenzkontur begrenzt wird. In der Steuereinrichtung ist ein Fahrmodus, ein Einlernmodus und ein Überwachungsmodus hinterlegt und die Steuereinrichtung umfasst ein Positioniermodul, ein Einlernmodul und ein Überwachungsmodul. Das Positioniermodul ist dazu eingerichtet, das Fahrzeug in dem Fahrmodus an einem die Grenzkontur umfassenden Einlernbereich zu positionieren. Das Einlernmodul ist dazu eingerichtet, in dem Einlernmodus eine Referenzkontur mittels Vermessung der Grenzkontur mit dem Umfeldsensor einzulernen. Das Überwachungsmodul ist dazu ausgebildet, in dem Überwachungsmodus den Schutzbereich basierend auf der Referenzkontur und auf durch den Umfeldsensor erfassten Messwerten zu überwachen.

Das Steuerungssystem ist insbesondere dazu ausgebildet, das im Rahmen der Erfindung angegebene Verfahren zur Überwachung eines Schutzbereichs eines Fahrzeugs auszuführen. Die Steuereinrichtung kann insbesondere dazu ausgebildet sein, das Fahrzeug bzw. einen Antrieb des Fahrzeugs zu steuern. Die Steuereinrichtung ist dazu ausgebildet, während der Laufzeit eines das Fahrzeug im Normalbetrieb steuernden Steuerprogramms zwischen dem Fahrmodus, dem Einlernmodus und dem Überwachungsmodus zu wechseln. In dem Normalbetrieb wird das Fahrzeug automatisiert anhand des Steuerprogramms und anhand in der Steuereinrichtung hinterlegter Konfigurations- und Initialisierungsdaten gesteuert. Die Konfigurations- und Initialisierungsdaten werden vor Beginn des Normalbetriebs ermittelt und in der Steuereinrichtung hinterlegt.

Die Steuereinrichtung kann auf einer oder auf mehreren Logikeinheiten implementiert sein. Die Logikeinheiten können als Mikrocontroller, FPGAs, ASICs oder Ähnliches ausgebildet sein. Das Positioniermodul und/oder das Einlernmodul und/oder das Überwachungsmodul können als Softwaremodule einer Steuerungssoftware der Logikeinheiten implementiert sein. Die Logikeinheiten der Steuereinrichtung können an dem Fahrzeug, in einer mit dem Fahrzeug über eine Datenverbindung verbundene und außerhalb des Fahrzeugs angeordneten Datenverarbeitungseinrichtung oder verteilt an dem Fahrzeug und in der außerhalb des Fahrzeugs angeordneten Datenverarbeitungseinrichtung implementiert sein.

Bei einer Weiterbildung des Steuerungssystems ist das Einlernmodul in den Umfeldsensor integriert ausgebildet. Insbesondere kann das Einlernmodul auf einem Logikbaustein des Umfeldsensors implementiert sein.

Bei einer Weiterbildung des Steuerungssystems ist das Einlernmodul getrennt von dem Fahrzeug, vorzugsweise als ein serverbasierter Dienst auf einer mit dem

Überwachungsmodul über eine Datenverbindung verbundenen Servereinrichtung, ausgebildet. Eine derartige Servereinrichtung kann insbesondere eine höhere Rechenleistung und Speicherkapazität als eine an dem Fahrzeug angeordnete Steuereinheit bereitstellen.

Es wird außerdem ein Fahrzeug mit einem erfindungsgemäßen Steuerungssystem zur Überwachung eines Schutzbereichs des Fahrzeugs angegeben.

Die Erfindung wird nachfolgend anhand von Figuren erläutert. Dabei zeigen in jeweils schematischer Darstellung:
- Fig. 1: ein Fahrzeug mit einem Steuerungssystem zur Überwachung eines Schutzbereichs;
- Fig. 2: das Steuerungssystem mit einem Einlernmodul, einem Überwachungsmodul und einem Positioniermodul;
- Fig. 3: Teilkonturen einer Grenzkontur des Schutzbereichs;
- Fig. 4: ein Verfahren zur Überwachung des Schutzbereichs des Fahrzeugs;
- Fig. 5: ein Überprüfen einer Konsistenz einer Messkontur;
- Fig. 6: einen Steuerablauf zur Steuerung des Fahrzeugs.

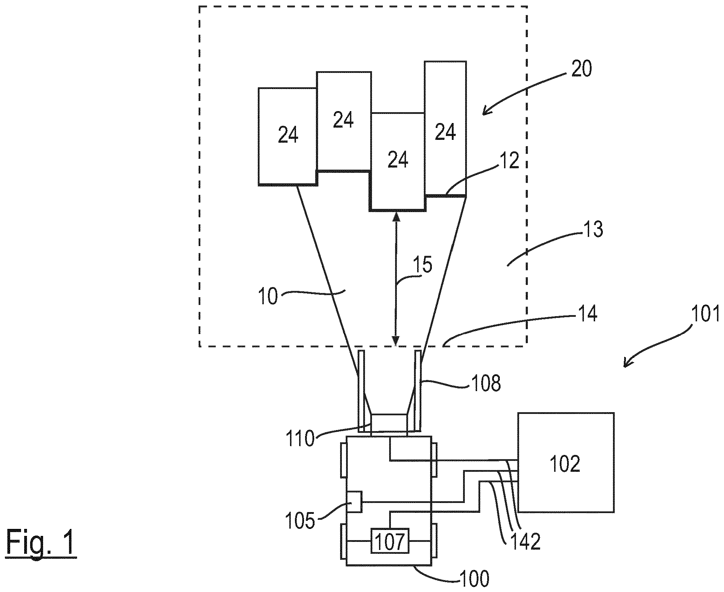

Fig. 1 zeigt ein Fahrzeug 100 mit einem Steuerungssystem 101 zur Überwachung eines Schutzbereichs 10 des Fahrzeugs 100. Der Schutzbereich 10 ist in einer Fahrtrichtung vor dem Fahrzeug 100 angeordnet. Zur Überwachung des Schutzbereichs 10 umfasst das Fahrzeug 100 einen Umfeldsensor 110. Der Schutzbereich 10 ist innerhalb eines Erfassungsbereichs des Umfeldsensors 110 angeordnet und wird an einer dem Umfeldsensor 110 gegenüberliegenden Seite durch eine Grenzkontur 12 begrenzt.

Die Grenzkontur 12 wird durch ein in einem Arbeitsbereich des Fahrzeugs 100 variabel positionierbares Umgebungsobjekt 20 vorgegeben. Bei dem Umgebungsobjekt 20 handelt es sich um durch eine von dem Fahrzeug 100 aufzunehmende Ladung 24, wobei die Ladung 24 einzelne Ladegüter umfasst. Die Ladung 24 kann beispielsweise auf einer Palette angeordnet sein. Zur Aufnahme der Ladung 24 umfasst das Fahrzeug 100 eine Lastaufnahmeeinrichtung 108.

Das Fahrzeug 100 ist als ein FTF ausgebildet und Bewegungen des Fahrzeugs 100 werden automatisiert von einer Steuereinrichtung 102 des Steuerungssystems 101 gesteuert. Insbesondere werden Fahrbewegungen des Fahrzeugs 100 zur Fahrt des Fahrzeugs 100 innerhalb eines Arbeitsbereich des Fahrzeugs 100 und Bewegungen der Lastaufnahmeeinrichtung 108 von der Steuereinrichtungen 102 gesteuert. Die gesteuerten Bewegungen des Fahrzeugs 100 stellen jeweils den Schutzbereich 10 gefährdende Bewegung des Fahrzeugs 100 dar. Mit der Steuereinrichtung 102 sind über eine oder mehrere Datenverbindungen 142 der Umfeldsensor 110, ein Positionssensor 105 und ein Antrieb 107 des Fahrzeugs verbunden. Über die eine oder die mehreren Datenverbindungen 142 werden durch den Umfeldsensor 110 erzeugte Sensordaten von dem Umfeldsensor 110 an die Steuereinrichtung 102 übertragen, es werden eine Lage des Fahrzeugs repräsentierende und durch den Positionssensor 105 erzeugte Lagedaten von den Positionssensor 105 an die Steuereinrichtung 102 übertragen und es werden den Antrieb 107 steuernde Antriebsdaten von der Steuereinrichtung 102 an den Antrieb 107 übertragen.

Die Grenzkontur 12 ist innerhalb eines Einlernbereichs 13 angeordnet. Insbesondere ist das durch die Grenzkontur 12 vorgegebene Umgebungsobjekt 20 innerhalb des Einlernbereichs 13 angeordnet. Der Einlernbereich 13 erstreckt sich vor der Grenzkontur 12 über einen Sicherheitsabstand 15. Der Sicherheitsabstand 15 kann beispielsweise einen kleinsten Abstand zwischen dem Umgebungsobjekt 20 und einer der Grenzkontur 12 gegenüberliegenden Seite 14 des Einlernbereichs 13 angeben.

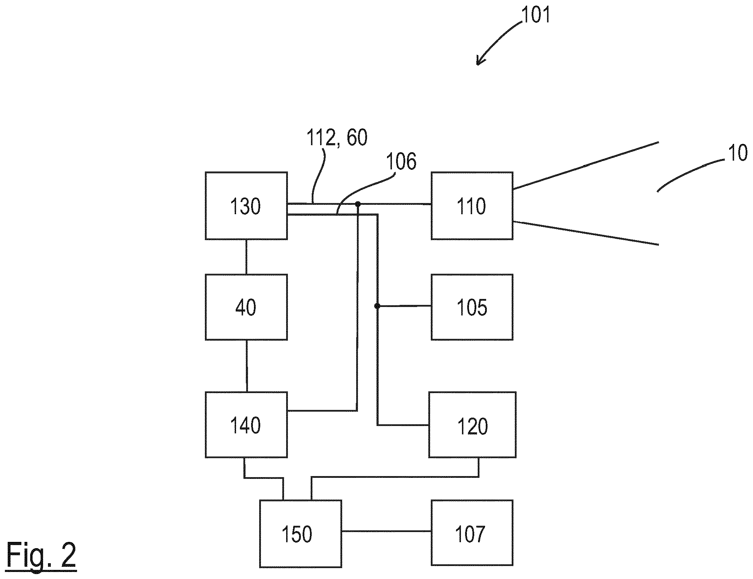

Fig. 2 zeigt das Steuerungssystem 101. Das Steuerungssystem 101 umfasst ein Positioniermodul 120, ein Einlernmodul 130, sowie ein Überwachungsmodul 140 des Steuerungssystems 101. Das Positioniermodul 120 ist mit einem Antriebsmodul 150 zur Ansteuerung des Antriebs 107 des Fahrzeugs 100 verbunden. Das Positioniermodul 120 ist dazu ausgebildet, Steuerbefehle zur Ansteuerung des Antriebs 107 an das Antriebsmodul 150 zu übertragen. Das Antriebsmodul 150 ist dazu ausgebildet, den Antrieb 107 auf Grundlage der Steuerbefehle anzusteuern. Der Antrieb 107 kann als ein Elektromotor ausgebildet sein und das Antriebsmodul 150 kann dazu ausgebildet sein, Antriebsströme des Elektromotors auf Grundlage der Steuerbefehle zu erzeugen.

Das Positioniermodul 120 ist außerdem mit dem Positionssensor 105 verbunden und empfängt von dem Positionssensor 105 die Lagedaten 106, welche eine Lage des Fahrzeugs 100 repräsentieren. Das Positioniermodul 120 regelt die Lage des Fahrzeugs 100 anhand der Lagedaten 106.

Das Einlernmodul 130 ist sowohl mit dem Umfeldsensor 110, als auch mit dem Positionssensor 105 verbunden und empfängt von dem Positionssensor 105 die Lagedaten 106 und die von dem Umfeldsensor 110 Umfeldsensordaten 112. Das Einlernmodul 130 ist dazu eingerichtet, eine Referenzkontur 40 einzulernen, indem es die Grenzkontur 12 mittels des Umfeldsensors 110 vermisst. Das Einlernmodul 130 ist außerdem dazu eingerichtet, die Referenzkontur 40 in dem Steuerungssystem 101 zu hinterlegen.

Das Überwachungsmodul 140 ist dazu eingerichtet, den Schutzbereich 10 basierend auf der Referenzkontur 40 und auf durch den Umfeldsensor 110 erfassten Messwerten 60 zu überwachen. Zur Übertragung der Messwerte 60 ist das Überwachungsmodul 140 mit dem Umfeldsensor 110 verbunden. Außerdem ist das Überwachungsmodul 140 dazu eingerichtet, auf die durch das Einlernmodul 130 hinterlegte Referenzkontur 40 zuzugreifen. Das Überwachungsmodul 140 ist dazu eingerichtet, den Schutzbereich 10 zu überwachen, indem es die Messwerte 60 mit der hinterlegten Referenzkontur 40 vergleicht. Weichen die Messwerte 60 von der Referenzkontur 40 ab, so ist das Überwachungsmodul 140 dazu eingerichtet, das Ausführen der durch das Antriebsmodul 150 gesteuerten Bewegung zu stoppen. Beispielsweise kann das Überwachungsmodul 140 mit dem Antriebsmodul 150 verbunden und dazu eingerichtet sein, eine Energiezufuhr des Antriebsmoduls 150 zu unterbrechen, um die Bewegung zu stoppen.

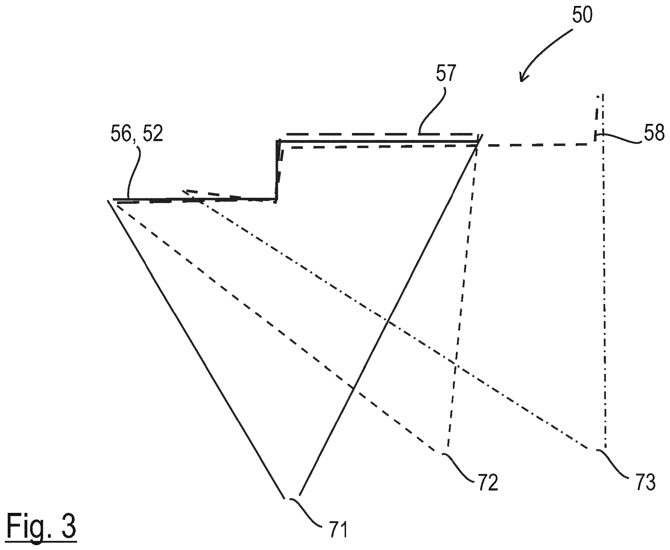

Fig. 3 zeigt eine erste Teilkontur 56, eine zweite Teilkontur 57 und eine dritte Teilkontur 58 die zu einer Messkontur 50 überlagert werden. Die erste Teilkontur 56 wird aus ersten Umfeldsensordaten 112 erzeugt, welche erfasst werden, während sich das Fahrzeug 100 in einer ersten Lage 71 befindet. Die zweite Teilkontur 57 wird aus zweiten Umfeldsensordaten 112 erzeugt, welche in einer zweiten Lage 72 des Fahrzeugs 100 erfasst werden, und die dritte Teilkontur 58 wird aus dritten Umfeldsensordaten 112 erzeugt, welche in einer dritten Lage 73 des Fahrzeugs 100 erfasst werden. Die erste, zweite und dritte Lage 71, 72, 73 unterscheiden sich jeweils voneinander, sowohl hinsichtlich der Position des Fahrzeugs 100, als auch hinsichtlich der Ausrichtung des Fahrzeugs 100. Die ersten Umfeldsensordaten 112 bilden einen ersten Umfeldsensordatensatz, die zweiten Umfeldsensordaten 112 bilden einen zweiten Umfeldsensordatensatz und die dritten Umfeldsensordaten 112 bilden einen dritten Umfeldsensordatensatz. Bei dem Überprüfen der Konsistenz der Messkontur 50 wird die erste Teilkontur 56 als eine Startkontur 52 definiert und die zweite Teilkontur 57 und die dritte Teilkontur 58 werden mit der die Startkontur 52 bildenden ersten Teilkontur 56 verglichen.

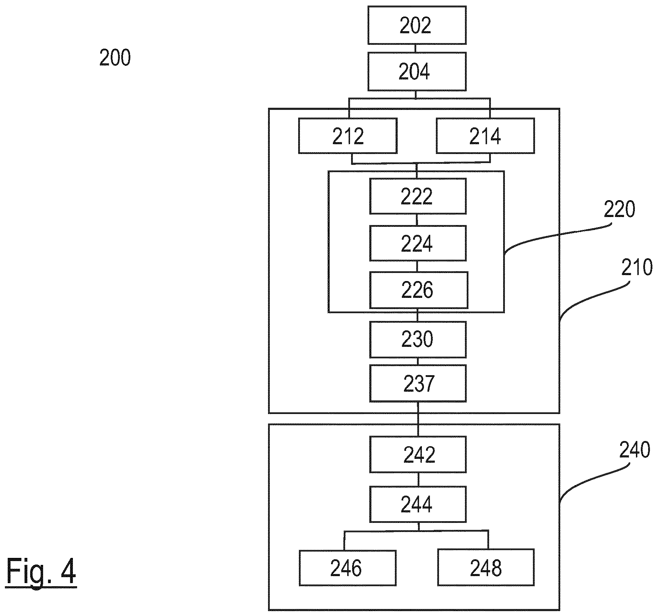

Fig. 4 zeigt ein Verfahren 200 zur Überwachung des Schutzbereichs 10 des Fahrzeugs 100. Das Verfahren 200 beginnt mit einem Positionieren 202 des Fahrzeugs 100 an dem Einlernbereich 13. Weiter umfasst das Verfahren 200 ein Halten 204 des Fahrzeugs 100 in einem sicheren Zustand, sobald das Fahrzeug 100 an dem Einlernbereich 13 positioniert ist. Anschließend umfasst das Verfahren 200, während das Fahrzeug 100 in dem sicheren Zustand gehalten wird, ein Einlernen 210 der Referenzkontur 40.

Das Einlernen 210 der Referenzkontur 40 umfasst ein Erfassen 212 der Umfeldsensordaten 112, sowie ein Erfassen 214 der den Umfeldsensordaten 112 jeweils zugeordneten Lagedaten 106. Das Einlernen 210 umfasst weiter ein Ableiten 220 der Messkontur 50 aus den Umfeldsensordaten 112, ein anschließendes Überprüfen 230 der Konsistenz der Messkontur 50 anhand der Lagedaten 106, sowie ein Hinterlegen 237 der Messkontur 50 als die Referenzkontur 40.

Das Ableiten 220 der Messkontur 50 umfasst ein Erstellen 222 der Teilkonturen 56, 57, 58, sowie ein räumliches Überlagern 224 der Teilkonturen 56, 57, 58 zu der Messkontur 50. Außerdem umfasst das Ableiten 220 der Messkontur 50 ein Erkennen 226 eines in dem Einlernbereich 13 angeordneten Störobjekts.

Das Verfahren 200 umfasst nach dem Einlernen 210 der Referenzkontur 40 ferner ein Überwachen 240 des Schutzbereichs 10 basierend auf der Referenzkontur 40 und auf den durch den Umfeldsensor 110 erfassten Messwerten 60. Das Überwachen 240 des Schutzbereichs 10 umfasst wiederum ein Einlesen 242 der durch den Umfeldsensor 110 erzeugten Messwerte 60 und ein Vergleichen der Messwerte 60 mit der hinterlegten Referenzkontur 40. Stimmen die Messwerte 60 mit der hinterlegten Referenzkontur 40 überein, liegen die Messwerte 60 beispielsweise innerhalb eines die Referenzkontur 40 umfassenden Toleranzbandes, so erfolgt ein Ausführen 246 einer den Schutzbereich 10 gefährdenden Bewegung des Fahrzeugs 100. Weichen die Messwerte 60 von der hinterlegten Referenzkontur 40 ab, liegen die Messwerte 60 beispielsweise außerhalb des Toleranzbandes, so erfolgt ein Versetzen 248 des Fahrzeugs 100 in einen sicheren Zustand, beispielsweise ein Stoppen des Ausführens 246 der Bewegung des Fahrzeugs 100. Das Überwachen 240 des Schutzbereichs 10, insbesondere das Einlesen 242 der Messwerte 60 und das Vergleichen 244 der Messwerte 60 mit der Referenzkontur 50 kann kontinuierlich wiederholt werden.

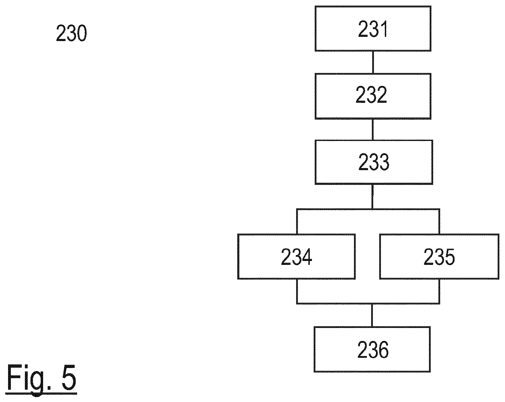

Fig. 5 zeigt das Überprüfen 230 der Konsistenz der Messkontur 50. Das Überprüfen 230 umfasst ein Vergleichen 231 der zweiten und dritten Teilkontur 57, 58 mit der die Startkontur 52 bildenden ersten Teilkontur 56, ein Berechnen 232 eines Gütewerts und ein Vergleichen 233 des Gütewerts dem Schwellenwert 54. Außerdem umfasst das Überprüfen 230 der Konsistenz der Messkontur 50 ein Ableiten 234 von aus der Vermessung der Grenzkontur 12 abgeleiteten Lagen des Fahrzeugs 100 und ein Ableiten 235 von gemessenen Lagen aus den Lagedaten 106.

Das Überprüfen 230 der Konsistenz der Messkontur 50 umfasst ferner ein Vergleichen 236 der abgeleiteten und der gemessenen Lagen.

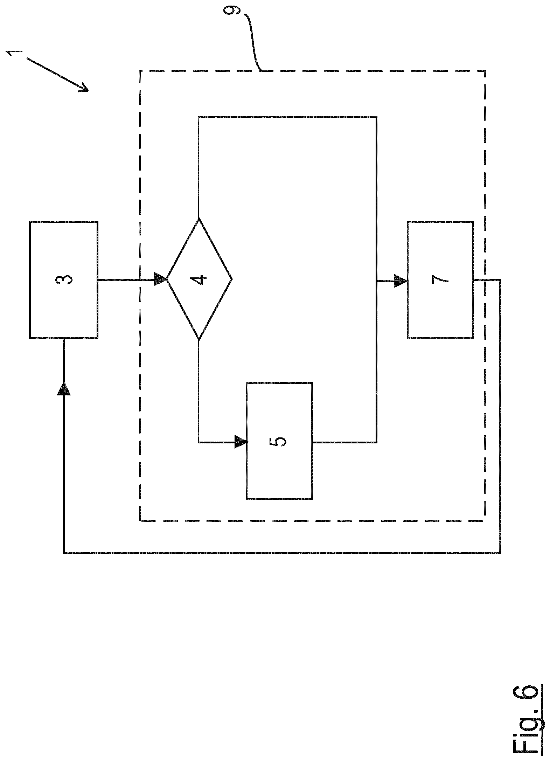

Fig. 6 zeigt einen Steuerablauf 1 zur Steuerung des Fahrzeugs 100. Der Steuerablauf 1 wird von dem Steuerungssystem 101, insbesondere von der Steuereinrichtung 102 des Steuerungssystems 101, während des Normalbetriebs des Fahrzeugs 100 ausgeführt. Der Steuerablauf 1 ist in einem das Fahrzeug 100 steuernden Steuerprogramms in der Steuereinrichtung 102 hinterlegt. Der Steuerablauf 1 umfasst einen Fahrmodus 3 und einen Absicherungsmodus 9 mit einem Einlernmodus 5 und einem Überwachungsmodus 7. Der Fahrmodus 3, der Absicherungsmodus 9, der Einlernmodus 5 und der Überwachungsmodus 7 sind damit jeweils in der Steuereinrichtung 102 hinterlegt.

Aus dem Fahrmodus 3 kann die Steuereinrichtung 102 in den Absicherungsmodus 9 überführt werden. In dem Absicherungsmodus 9 wird die Bewegung des Fahrzeugs 100 unter Absicherung gegenüber der Referenzkontur 40 gesteuert. In dem Absicherungsmodus 9 erfolgt zunächst eine Referenzkonturabfrage 4, bei der überprüft wird, ob die Referenzkontur 40 bereits hinterlegt und gültig ist. Ist dies der Fall, so geht die Steuereinrichtung 102 direkt in den Überwachungsmodus 7 über, in dem das Überwachungsmodul 140 den Schutzbereich 10 überwacht. Ist die Referenzkontur 40 nicht hinterlegt oder ungültig, so geht die Steuereinrichtung 102 in den Einlernmodus 5 über, in dem das Einlernmodul 130 die Referenzkontur 40 mittels der Vermessung der Grenzkontur 12 einlernt. Aus dem Absicherungsmodus 9, insbesondere aus dem Überwachungsmodus 7, kann die Steuereinrichtung 102 wieder in den Fahrmodus 3 übergehen. In dem Fahrmodus 3 wird die Bewegung des Fahrzeugs 100 ohne Absicherung gegenüber der Referenzkontur 40 gesteuert.

Der Steuerablauf 1 und insbesondere die Übergänge zwischen dem Fahrmodus 3, dem Absicherungsmodus 9 sowie die Übergänge zwischen dem Einlernmodus 5 und im Überwachungsmodus 7 des Absicherungsmodus 9 werden automatisiert auf Grundlage des in der Steuereinrichtung 102 hinterlegten Steuerprogramms ausgeführt. Das automatisierte Ausführen des Steuerablaufs 1 kann unter Berücksichtigung von in die Steuereinrichtung 102 eingelesenen Eingangsdaten des Steuerungssystems 101 erfolgen.

### Bezugszeichenliste

- 1: Steuerablauf
- 3: Fahrmodus
- 4: Referenzkonturabfrage
- 5: Einlernmodus
- 7: Überwachungsmodus
- 9: Absicherungsmodus
- 10: Schutzbereich
- 12: Grenzkontur
- 13: Einlernbereich
- 14: Seite
- 15: Sicherheitsabstand
- 20: Umgebungsobjekt
- 24: Ladegut
- 40: Referenzkontur
- 50: Messkontur
- 52: Startkontur
- 54: Schwellenwert
- 56: erste Teilkontur
- 57: zweite Teilkontur
- 58: weitere Teilkontur
- 60: Messwert
- 71: erste Lage
- 72: zweite Lage
- 73: dritte Lage
- 100: Fahrzeug
- 101: Steuerungssystem
- 102: Steuereinrichtung
- 105: Positionssensor
- 106: Lagedaten
- 107: Antrieb
- 108: Lastaufnahmeeinrichtung
- 110: Umfeldsensor
- 112: Umfeldsensordaten
- 120: Positioniermodul
- 130: Einlernmodul
- 131: Servereinrichtung
- 140: Überwachungsmodul
- 142: Datenverbindung
- 150: Antriebsmodul
- 200: Verfahren
- 202: Positionieren
- 204: Halten in sicherem Zustand
- 210: Einlernen
- 212: Erfassen von Umfeldsensordaten
- 214: Erfassen von Lagedaten
- 220: Ableiten einer Messkontur
- 222: Erstellen von Teilkonturen
- 224: räumliches Überlagern der Teilkonturen
- 226: Erkennen eines Störobjekts
- 230: Überprüfen einer Konsistenz einer Messkontur
- 231: Vergleichen mit Startkontur
- 232: Berechnen eines Gütewerts
- 233: Vergleichen des Gütewerts mit Schwellenwert
- 234: Ableiten von abgeleiteten Lagen
- 235: Ableiten von gemessenen Lagen
- 236: Vergleichen der abgeleiteten und gemessenen Lagen
- 237: Hinterlegen
- 240: Überwachen
- 242: Einlesen von Messwerten
- 244: Vergleichen der Messwerte
- 246: Ausführen einer gefährdenden Bewegung
- 248: Versetzen in sicheren Zustand

## Patentansprüche

1. Verfahren (200) zur Überwachung eines Schutzbereichs (10) eines Fahrzeugs (100),
wobei der Schutzbereich (10) zumindest bereichsweise durch eine Grenzkontur (12) begrenzt wird,
wobei das Verfahren (200) die folgenden Schritte umfasst:
- Positionieren (202) des Fahrzeugs (100) an einem die Grenzkontur (12) umfassenden Einlernbereich (13),
- Einlernen (210) einer Referenzkontur (40) mittels Vermessung der Grenzkontur (12) mit einem an dem Fahrzeug (100) angeordneten Umfeldsensor (110),
- Überwachen (240) des Schutzbereichs (10) basierend auf der Referenzkontur (40) und auf durch den Umfeldsensor (110) erfassten Messwerten (60),
wobei das Überwachen (240) ein Abtasten der Grenzkontur (12) mit dem Umfeldsensor (110), ein Einlesen der dabei durch den Umfeldsensor (110) erfassten Messwerte (60) und ein Vergleichen (244) der Messwerte (60) mit der hinterlegten Referenzkontur (40) umfasst, und
- Versetzen (248) des Fahrzeugs (100) in einen sicheren Zustand, falls die Messwerte (60) außerhalb eines um die Referenzkontur (40) angeordneten Toleranzbandes liegen.

2. Verfahren (200) nach Anspruch 1,
wobei das Einlernen (210) die folgenden Schritte umfasst:
- Erfassen (212) von Umfeldsensordaten (112) mittels des Umfeldsensors (110) aus dem Einlernbereich (13),
- Ableiten (220) einer Messkontur (50) aus den Umfeldsensordaten (112),
- Überprüfen (230) einer Konsistenz der Messkontur (50),
- Hinterlegen (237) der Messkontur (50) als die Referenzkontur (40) zum Überwachen (240) des Schutzbereichs (10), falls die Messkontur (50) konsistent ist.

3. Verfahren (200) nach einem der vorhergehenden Ansprüche, wobei das Überwachen (240) den folgenden Schritt umfasst:
- Ausrichten des Umfeldsensors (110) auf die Grenzkontur (12).

4. Verfahren (200) nach einem der vorhergehenden Ansprüche, wobei das Verfahren (200) ein Ausführen (246) einer den Schutzbereich (10) gefährdenden Bewegung des Fahrzeugs (100) umfasst, wobei das Überwachen (240) des Schutzbereichs (10) während des Ausführens (246) der Bewegung erfolgt,
wobei das Ausführen (246) der Bewegung gestoppt wird, wenn die Messwerte (60) von der Referenzkontur (40) abweichen.

5. Verfahren (200) nach einem der vorhergehenden Ansprüche, wobei das Verfahren (200) nach dem Positionieren (202) des Fahrzeugs (100) an dem Einlernbereich (13) ein Halten (204) des Fahrzeugs (100) in einem sicheren Zustand umfasst,
wobei das Einlernen (210) der Referenzkontur (40) erfolgt, während sich das Fahrzeug (100) in dem sicheren Zustand befindet.

6. Verfahren (200) nach einem der vorhergehenden Ansprüche, wobei die Grenzkontur (12) durch ein in einem Arbeitsbereich des Fahrzeugs (100) variabel positionierbares Umgebungsobjekt (20) vorgegeben wird,
wobei das Umgebungsobjekt (20) beispielsweise durch eine von dem Fahrzeug (100) aufzunehmende Ladung (24) gebildet wird.

7. Verfahren (200) nach einem der Ansprüche 2 bis 6,
wobei eine Mehrzahl von Umfeldsensordatensätzen mit Umfeldsensordaten (112) erfasst wird,
wobei das Ableiten (220) der Messkontur (50) ein Erstellen (222) von Teilkonturen (56, 57, 58) aus den einzelnen Umfeldsensordatensätzen (112) und ein
räumliches Überlagern (224) der Teilkonturen (56, 57, 58) zu der Messkontur (50) umfasst.

8. Verfahren (200) nach Anspruch 7,
wobei bei dem Überprüfen (230) der Konsistenz der Messkontur (50) alle Teilkonturen (56, 57, 58) ausgehend von einer Startkontur (52) nacheinander mit der Startkontur (52) verglichen werden,
wobei als die Startkontur (52) beispielsweise eine vordefinierte und hinterlegte Referenzteilkontur verwendet wird.

9. Verfahren (200) nach einem der Ansprüche 7 bis 8,
wobei das Überprüfen (230) der Konsistenz der Messkontur (50) umfasst:
- Berechnen (232) eines Gütewerts für die Überlagerung der Teilkonturen (56, 57, 58) und
- Vergleichen (233) des Gütewerts mit einem vorgegebenen Schwellenwert (54); und
wobei die Messkontur (50) konsistent ist, wenn der Gütewert den vorgegebenen Schwellenwert (54) unterschreitet.

10. Verfahren (200) nach einem der vorhergehenden Ansprüche wobei das Fahrzeug (100) während der Vermessung der Grenzkontur (12) in unterschiedlichen räumlichen Lagen (71, 72, 73) angeordnet wird.

11. Verfahren (200) nach einem Anspruch 10,
wobei das Verfahren (200) ein Erfassen (214) von die unterschiedlichen räumlichen Lagen (71, 72, 73) repräsentierenden Lagedaten (106) umfasst,
wobei die Lagedaten (106) bei dem Überprüfen (230) der Konsistenz der Messkontur (50) berücksichtigt werden.

12. Verfahren (200) nach Anspruch 11,
wobei das Berücksichtigen der Lagedaten (106) bei dem Überprüfen (230) der Konsistenz der Messkontur (50) umfasst:
- Ableiten (234) von aus der Vermessung der Grenzkontur (12) abgeleiteten Lagen des Fahrzeugs (100),
- Vergleichen (236) der abgeleiteten Lagen des Fahrzeugs (100) mit durch die Lagedaten (106) repräsentierten gemessenen Lagen des Fahrzeugs (100).

13. Verfahren (200) nach einem der vorhergehenden Ansprüche,
wobei das Einlernen (210) der Messkontur (50) ein Erkennen (226) eines in dem Einlernbereich (13) angeordneten Störobjekts umfasst,
wobei das Störobjekt beispielsweise auf Grundlage seiner Form, seiner Bewegung und/oder seiner Reflexionseigenschaften erkannt wird, wobei die eingelernte Referenzkontur (40) beispielsweise ohne das Störobjekt erstellt wird.

14. Verfahren (200) nach einem der vorhergehenden Ansprüche,
wobei in der Referenzkontur (40) bei der Vermessung der Grenzkontur (12) gewonnene Remissionswerte hinterlegt sind,
wobei die Messwerte (60) in dem Schutzbereich (10) erfasste Remissionsmesswerte umfassen und
wobei bei dem Überwachen (240) des Schutzbereichs (10) die Remissionsmesswerte mit den Remissionswerten der Referenzkontur (40) verglichen werden.

15. Steuerungssystem (101) zur Überwachung eines Schutzbereichs (10) eines Fahrzeugs (10) mit einem an dem Fahrzeug (100) anordenbaren Umfeldsensor (110) und mit einer Steuereinrichtung (102),
wobei der Schutzbereich (10) zumindest bereichsweise durch eine Grenzkontur (12) begrenzt wird,
wobei in der Steuereinrichtung (102) ein Fahrmodus (3), ein Einlernmodus (5) und ein Überwachungsmodus (7) hinterlegt ist,
wobei die Steuereinrichtung (102) ein Positioniermodul (120), ein Einlernmodul (130) und ein Überwachungsmodul (140) umfasst,
wobei das Positioniermodul (120) dazu eingerichtet ist, das Fahrzeug (100) in dem Fahrmodus (3) an einem die Grenzkontur (12) umfassenden Einlernbereich (13) zu positionieren,
wobei das Einlernmodul (130) dazu eingerichtet ist, in dem Einlernmodus (5) eine Referenzkontur (40) mittels Vermessung der Grenzkontur (12) mit dem Umfeldsensor (110) einzulernen,
wobei das Überwachungsmodul (140) dazu ausgebildet ist, in dem Überwachungsmodus (7) den Schutzbereich (10) basierend auf der Referenzkontur (40) und auf durch den Umfeldsensor (110) erfassten Messwerten (60) zu überwachen,
wobei das Überwachen (240) ein Abtasten der Grenzkontur (12) mit dem Umfeldsensor (110), ein Einlesen der dabei durch den Umfeldsensor (110) erfassten Messwerte (60) und ein Vergleichen (244) der Messwerte (60) mit der hinterlegten Referenzkontur (40) umfasst,
wobei das Steuerungssystem (1) dazu ausgebildet ist, das Fahrzeug (100) in einen sicheren Zustand zu versetzen, falls die Messwerte (60) außerhalb eines um die Referenzkontur (40) angeordneten Toleranzbandes liegen.

## Claims

1. A method (200) of monitoring a protected zone (10) of a vehicle (100), wherein the protected zone (10) is at least regionally bounded by a boundary contour (12);
wherein the method (200) comprises the following steps:
- positioning (202) the vehicle (100) at a teaching zone (13) comprising the boundary contour (12);
- teaching (210) a reference contour (40) by means of measuring the boundary contour (12) by an environmental sensor (110) arranged at the vehicle (100);
- monitoring (240) the protected zone (10) on the basis of the reference contour (40) and of measured values (60) detected by the environmental sensor (110),
wherein the monitoring (240) comprises a scanning of the boundary contour (12) by the environmental sensor (110), a reading in of the measured values (60) detected in so doing by the environmental sensor (110) and a comparison (244) of the measured values (60) with the stored reference contour (40); and
- shifting (248) the vehicle (100) into a safe state if the measured values (60) are disposed outside a tolerance band arranged around the reference contour (40).

2. A method (200) in accordance with claim 1,
wherein the teaching (210) comprises the following steps:
- detecting (212) environmental sensor data (112) by means of the environmental sensor (110) from the teaching zone (13);
- deriving (220) a measurement contour (50) from the environmental sensor data (112);
- checking (230) a consistency of the measurement contour (50); and
- storing (237) the measurement contour (50) as the reference contour (40) for monitoring (240) the protected zone (10) if the measurement contour (50) is consistent.

3. A method (200) in accordance with one of the preceding claims,
wherein the monitoring (240) comprises the following step:
- aligning the environmental sensor (110) to the boundary contour (12).

4. A method (200) in accordance with any one of the preceding claims,
wherein the method (200) comprises performing (246) a movement of the vehicle (100) endangering the protected zone (10);
wherein the monitoring (240) of the protected zone (10) takes place during the performance (246) of the movement; and
wherein the performance (246) of the movement is stopped when the measured values (60) differ from the reference contour (40).

5. A method (200) in accordance with any one of the preceding claims,
wherein the method (200) comprises a holding (204) of the vehicle (100) in a safe state after the positioning (202) of the vehicle (100) at the teaching zone (13); and
wherein the teaching (210) of the reference contour (40) takes place while the vehicle (100) is in the safe state.

6. A method (200) in accordance with any one of the preceding claims, wherein the boundary contour (12) is predefined by an environmental object (20) variably positionable in a working zone of the vehicle (100), wherein the environmental object (20) is, for example, formed by a load (24) to be picked up by the vehicle (100).

7. A method (200) in accordance with any one of the claims 2 to 6,
wherein a plurality of environmental sensor data sets are detected using environmental sensor data (112); and
wherein the deriving (220) of the measurement contour (50) comprises a creation (222) of part contours (56, 57, 58) from the individual environmental sensor data sets (112); and a
spatial superposition (224) of the part contours (56, 57, 58) to form the measurement contour (50).

8. A method (200) in accordance with claim 7,
wherein all the part contours (56, 57, 58) are compared with the start contour (52) one after the other, starting from a start contour (52), in the check (230) of the consistency of the measurement contour (50),
wherein a predefined and stored reference part contour is, for example, used as the start contour (52).

9. A method (200) in accordance with one of the claims 7 to 8,
wherein the check (230) of the consistency of the measurement contour (50) comprises:
- calculating (232) a quality value for the superposition of the part contours (56, 57, 58); and
- comparing (233) the quality value with a predefined threshold value (54); and
wherein the measurement contour (50) is consistent when the quality value falls below the predefined threshold value (54).

10. A method (200) in accordance with any one of the preceding claims, wherein the vehicle (100) is arranged at different spatial poses (71, 72, 73) during the measurement of the boundary contour (12).

11. A method (200) in accordance with claim 10,
wherein the method (200) comprises a detection (214) of pose data (106) representing the different spatial poses (71, 72, 73); and
wherein the pose data (106) are considered in the check (230) of the consistency of the measurement contour (50).

12. A method (200) in accordance with claim 11,
wherein the consideration of the pose data (106) in the check (230) of the consistency of the measurement contour (50) comprises:
- deriving (231) poses of the vehicle (100) derived from the measurement of the boundary contour (12); and
- comparing (236) the derived poses of the vehicle (100) with measured poses of the vehicle (100) represented by the pose data (106).

13. A method (200) in accordance with any one of the preceding claims,
wherein the teaching (210) of the measurement contour (50) comprises a recognition (226) of an interference object arranged in the teaching zone (13),
wherein the interference object is, for example, recognized on the basis of its shape, its movement and/or its reflection properties,
wherein the taught reference contour (40) is, for example, created without the interference object.

14. A method (200) in accordance with any one of the preceding claims,
wherein remission values acquired in the measurement of the boundary contour (12) are stored in the reference contour (40);
wherein the measured values (60) comprise measured remission values detected in the protected zone (10); and
wherein the remission values are compared with the remission values of the reference contour (40) in the monitoring (240) of the protected zone (10).

15. A control system (101) for monitoring a protected zone (10) of a vehicle (100) having an environmental sensor (110) arrangeable at the vehicle (100) and having a control device (102),
wherein the protected zone (10) is at least regionally bounded by a boundary contour (12);
wherein a driving mode (3), a teaching mode (5) and a monitoring mode (7) are stored in the control device (102);
wherein the control device (102) comprises a positioning module (120), a teaching module (130) and a monitoring module (140);
wherein the positioning module (120) is adapted to position the vehicle (100) at a teaching zone (13) comprising the boundary contour (12) in the driving mode (3);
wherein the teaching module (130) is adapted to teach a reference contour (40) by means of measuring the boundary contour (12) by the environmental sensor (110) in the teaching mode (5);
wherein the monitoring module (140) is configured to monitor the protected zone (10) on the basis of the reference contour (40) and of measured values (40) detected by the environmental sensor (110) in the monitoring mode (7);
wherein the monitoring (240) comprises a scanning of the boundary contour (12) by the environmental sensor (110), a reading in of the measured values (60) detected in so doing by the environmental sensor (110) and a comparison (244) of the measured values (60) with the stored reference contour (40); and
wherein the control system (1) is configured to shift the vehicle (100) into a safe state if the measured values (60) are disposed outside a tolerance band arranged around the reference contour (40).

## Revendications

1. Procédé (200) de surveillance d'une zone de protection (10) d'un véhicule (100),
dans lequel la zone de protection (10) est délimitée au moins localement par un contour de délimitation (12),
le procédé (200) comprenant les étapes suivantes consistant à :
- positionner (202) le véhicule (100) au niveau d'une zone d'apprentissage (13) comprenant le contour de délimitation (12),
- apprendre (210) un contour de référence (40) par mesurage du contour de délimitation (12) avec un capteur d'environnement (110) disposé sur le véhicule (100),
- surveiller (240) la zone de protection (10) sur la base du contour de référence (40) et des valeurs mesurées (60) acquises par le capteur d'environnement (110),
la surveillance (240) comprenant un balayage du contour de délimitation (12) avec le capteur d'environnement (110), une lecture des valeurs mesurées (60) acquises par le capteur d'environnement (110), et une comparaison (244) des valeurs mesurées (60) avec le contour de référence (40) stocké, et
- mettre le véhicule (100) dans un état sécurisé si les valeurs mesurées (60) se situent à l'extérieur d'une bande de tolérances disposée autour du contour de référence (40).

2. Procédé (200) selon la revendication 1,
dans lequel l'apprentissage (210) comprend les étapes suivantes consistant à :
- acquérir (212) des données de capteur d'environnement (112) au moyen du capteur d'environnement (110) à partir de la zone d'apprentissage (13),
- dériver (220) un contour de mesure (50) à partir des données de capteur d'environnement (112),
- vérifier (230) une cohérence du contour de mesure (50),
- stocker (237) le contour de mesure (50) comme contour de référence (40) pour surveiller (240) la zone de protection (10), si le contour de mesure (50) est cohérent.

3. Procédé (200) selon l'une des revendications précédentes,
dans lequel la surveillance (240) comprend l'étape suivante consistant à :
- orienter le capteur d'environnement (110) vers le contour de délimitation (12).

4. Procédé (200) selon l'une des revendications précédentes,
dans lequel le procédé (200) comprend l'exécution (246) d'un mouvement du véhicule (100) mettant en danger la zone de protection (10),
la surveillance (240) de la zone de protection (10) est effectuée pendant l'exécution (246) du mouvement,
l'exécution (246) du mouvement est arrêtée si les valeurs mesurées (60) s'écartent du contour de référence (40).

5. Procédé (200) selon l'une des revendications précédentes,
dans lequel le procédé (200) comprend, après avoir positionné (202) le véhicule (100) au niveau de la zone d'apprentissage (13), le maintien (204) du véhicule (100) dans un état sécurisé,
l'apprentissage (210) du contour de référence (40) est effectué lorsque le véhicule (100) est dans l'état sécurisé.

6. Procédé (200) selon l'une des revendications précédentes,
dans lequel le contour de délimitation (12) est prédéterminé par un objet environnant (20) qui peut être positionné de manière variable dans une zone de travail du véhicule (100),
l'objet environnant (20) étant formé, par exemple, par une charge (24) à recevoir par le véhicule (100).

7. Procédé (200) selon l'une des revendications 2 à 6,
dans lequel une pluralité d'ensembles de données de capteur d'environnement comprenant des données de capteur d'environnement (112) sont acquis,
la dérivation (220) du contour de mesure (50) comprend la création (222) de contours partiels (56, 57, 58) à partir des ensembles individuels de données de capteur d'environnement (112), et
la superposition spatiale (224) des contours partiels (56, 57, 58) pour donner le contour de mesure (50).

8. Procédé (200) de la revendication 7,
dans lequel, lors de la vérification (230) de la cohérence du contour de mesure (50), en partant d'un contour de départ (52), tous les contours partiels (56, 57, 58) sont successivement comparés audit contour de départ (52), par exemple, un contour partiel de référence prédéfini et stocké est utilisé comme contour de départ (52).

9. Procédé (200) selon l'une des revendications 7 à 8,
dans lequel la vérification (230) de la cohérence du contour de mesure (50) consiste à :
- calculer (232) une valeur de qualité pour la superposition des contours partiels (56, 57, 58) ; et
- comparer (233) la valeur de qualité avec une valeur seuil prédéterminée (54) ; et
dans lequel le contour de mesure (50) est cohérent si la valeur de qualité est inférieure à la valeur seuil prédéterminée (54).

10. Procédé (200) selon l'une des revendications précédentes,
dans lequel le véhicule (100) est disposé dans différentes positions spatiales (71, 72, 73) pendant le mesurage du contour de délimitation (12).

11. Procédé (200) selon la revendication 10,
dans lequel le procédé (200) comprend l'acquisition (214) de données de position (106) représentant les différentes positions spatiales (71, 72, 73), les données de position (106) sont prises en compte lors de la vérification (230) de la cohérence du contour de mesure (50).

12. Procédé (200) selon la revendication 11,
dans lequel la prise en compte des données de position (106) lors de la vérification (230) de la cohérence du contour de mesure (50) consiste à :
- dériver (234) des positions du véhicule (100) dérivées du mesurage du contour de délimitation (12),
- comparer (236) les positions dérivées du véhicule (100) avec des positions mesurées du véhicule (100) représentées par les données de position (106).

13. Procédé (200) selon l'une des revendications précédentes,
dans lequel l'apprentissage (210) du contour de mesure (50) consiste à reconnaître (226) un objet perturbateur disposé dans la zone d'apprentissage (13),
l'objet perturbateur est reconnu, par exemple, sur la base de sa forme, de son mouvement et/ou de ses propriétés de réflexion, et
le contour de référence (40) appris est créé, par exemple, sans l'objet perturbateur.

14. Procédé (200) selon l'une des revendications précédentes,
dans lequel des valeurs de renvoi obtenues lors le mesurage du contour de délimitation (12) sont stockées dans le contour de référence (40),
les valeurs mesurées (60) comprennent des valeurs mesurées de renvoi acquises dans la zone de protection (10), et
pendant la surveillance (240) de la zone de protection (10), les valeurs mesurées de renvoi sont comparées aux valeurs de renvoi du contour de référence (40).

15. Système de commande (101) pour surveiller une zone de protection (10) d'un véhicule (10), comportant un capteur d'environnement (110) qui peut être disposé sur le véhicule (100) et comportant un dispositif de commande (102),
la zone de protection (10) étant délimitée au moins localement par un contour de délimitation (12),
un mode de conduite (3), un mode d'apprentissage (5) et un mode de surveillance (7) sont stockés dans le dispositif de commande (102),
le dispositif de commande (102) comprend un module de positionnement (120), un module d'apprentissage (130) et un module de surveillance (140), le module de positionnement (120) est conçu pour positionner le véhicule (100) dans le mode de conduite (3) au niveau d'une zone d'apprentissage (13) comprenant le contour de délimitation (12),
le module d'apprentissage (130) est conçu pour apprendre un contour de référence (40) dans le mode d'apprentissage (5) par mesurage du contour de délimitation (12) avec le capteur d'environnement (110),
le module de surveillance (140) est réalisé pour surveiller la zone de protection (10) dans le mode de surveillance (7) sur la base du contour de référence (40) et des valeurs de mesure (60) acquises par le capteur d'environnement (110),
la surveillance (240) consiste à balayer le contour de délimitation (12) avec le capteur d'environnement (110), à lire les valeurs mesurées (60) acquises par le capteur d'environnement (110), et à comparer (244) les valeurs mesurées (60) avec le contour de référence (40) stocké,
le système de commande (1) est réalisé pour mettre le véhicule (100) dans un état sécurisé si les valeurs mesurées (60) se situent à l'extérieur d'une bande de tolérances disposée autour du contour de référence (40).
